# EUROPÄISCHE PATENTSCHRIFT

(11) **EP 4 016 201 B1**
(45) Veröffentlichungstag und Bekanntmachung des Hinweises auf die Patenterteilung: **13.08.2025**
(21) Anmeldenummer: 21000360.4
(22) Anmeldetag: 17.12.2021
(51) Int. Cl.: G05B 9/02, H02H 9/02

(54) **SICHERHEITSABSCHALTVORRICHTUNG FÜR EINE MECHATRONISCHE KOMPONENTE**
SAFETY CUT-OFF DEVICE FOR MECHATRONIC COMPONENT
DISPOSITIF DE COUPURE DE SÉCURITÉ POUR UN COMPOSANT MECATRONIQUE

(30) Priorität: 21.12.2020 DE 102020007808
(43) Veröffentlichungstag der Anmeldung: 22.06.2022
(73) Patentinhaber: Zimmer, Günther Stephan, 77866 Rheinau (DE); Zimmer, Martin, 77866 Rheinau (DE)
(72) Erfinder: Zimmer, Günther Stephan, 77866 Rheinau (DE); Zimmer, Martin, 77866 Rheinau (DE)
(74) Vertreter: Thämer, Wolfgang

(56) Entgegenhaltungen:
- CN-U- 211 375 405
- DE-A1- 102020 112 985
- US-B2- 7 742 270
- ANONYMOUS: "LM2940,LM2990,LM2991,LM309,LM317,LP2951,LP2952,LP2953,LP2954 Linear and Switching Voltage Regulator Fundamental Part 1", INTERNET CITATION, 1 January 2011 (2011-01-01), XP002795648, Retrieved from the Internet <URL:http://www.ti.com/lit/an/snva558/snva558.pdf> [retrieved on 20191114]

## Beschreibung

Die Erfindung betrifft eine Sicherheitsabschaltvorrichtung für ein mechatronisches Gerät zur Gewährleistung einer sicheren Nothalt-Funktion.

Moderne Sicherheitskonzepte basieren auf einer Mischung aus Hard-und Softwarekomponenten, die ein sicheres Herunterfahren einzelner Baugruppen im Notfall ermöglichen. Genügte es noch vor wenigen Jahren, im Notfall alle Maschinenteile spannungsfrei zu schalten, so sind die einzelnen Abläufe inzwischen so fein aufeinander abgestimmt, dass oft viele Bewegungen ineinandergreifen. Dadurch werden gezielte Abschaltungen einzelner Baugruppen oder ein Herunterfahren nach verschiedenen Stoppkategorien erforderlich. Hierfür hat sich in der Automation eine funktional sichere Kommunikation bewährt. Für Feldbusse wurden mehrere Profile in der IEC 61784-3-x-Serie unter der Bezeichnung FSCP (functional safety communication profiles) standardisiert. Die Sicherheitsfunktionen werden dabei z.B. durch Sicherheitssensoren und/oder Sicherheitsaktoren realisiert.

Mechatronische Komponenten wie Kurzhubachsen, Kleinachsenantriebe, die z.B. in Greifern, Klemmungen oder Bremsen eingebaut sind, werden in der Regel energetisch - zumindest auf dem letzten Meter - über ein z.B. fünfadriges Kabel versorgt. Über dieses Kabel wird der mechatronischen Komponente sowohl die Aktorals auch die Sensorenergie zugeführt. Die Endstufe des Geräts, inklusive dem Endstufenrechner des Reglers, wird über die Aktorspannung versorgt. Dies trifft u.a. auch auf die Lüftsysteme ggf. eingebauter elektromechanischer Bremsen zu.

Wird beispielsweise zu Wartungszwecken die Aktorspannung im Rahmen eines Nothalts abgeschaltet, besteht die Möglichkeit, dass bei einem Kurzschluss zwischen mindestens einer Sensor- und einer Aktorader ein Übersprechen der Sensorspannung auf eine Aktorader stattfindet, wodurch der Aktor der mechatronischen Komponente eine unzulässige Bewegung ausführen könnte. Eine solche Situation tritt u.a. dann ein, wenn der Achsregler des Aktors einen Softwarefehler hätte und somit trotz der Abschaltung der Aktorspannung noch Achsbewegungen einleiten würde.

Die DE 10 2020 112 985 A1 offenbart einen Adapter für Signalleitungen, um diese in einem explosionsgefährdeten Bereich betreiben zu können. Gemäß dieser Druckschrift wird für diesen Einsatz der Signalstrom in den beiden Signalwegen auf unterschiedliche Werte begrenzt.

Die US 7,742 270 B2 (D2) offenbart eine Strombegrenzung, um einen Sensorbetrieb in einer zündfähigen Gasatmosphäre zu ermöglichen. Aktoren und zugehörige Lastleitungen sind nicht offenbart.

Der vorliegenden Erfindung liegt die Problemstellung zugrunde, eine Sicherheitsabschaltvorrichtung für ein mechatronisches Gerät zu schaffen, das die zuvor genannte Situation erkennen und in der Folge entsprechend absichern kann.

Diese Problemstellung wird mit den Merkmalen des Patentanspruchs 1 gelöst.

Mit der Erfindung wird eine Sicherheitsabschaltvorrichtung geschaffen, die u.a. zwischen einem IO-Link-Master und einem mechatronischen Gerät angeordnet bzw. über eine Steckverbindung verbunden ist. Der IO-Link-Master bildet zusammen mit mindestens einem mit Sensoren und Aktoren ausgestatteten mechatronischen IO-Link-Gerät ein IO-Link-System. Der IO-Link-Master stellt dabei die Schnittstelle zur überlagerten Steuerung (SPS) zur Verfügung und steuert die Kommunikation mit dem mindestens einen angeschlossenen IO-Link-Gerät, das beispielsweise eine Kurzhubachse ist.

Zumindest ein Teil des - zwischen dem IO-Link-Master und dem angeschlossenen mechatronischen Gerät verlegten - Versorgungskabels bzw. Kabelbaums weist neben einer reinen Kommunikationsleitung je zwei versorgungsspannungsführende Leitungen für den Aktor und zwei versorgungsspannungsführende Leitungen für die Sensoren des mechatronischen Geräts auf. Die Versorgungsspannungsleitungen des Aktors und der Sensoren sind dabei galvanisch getrennt ausgeführt.

Die Sicherheitsabschaltvorrichtung verhindert u.a. nach einem Nothalt des mechatronischen Geräts - durch Abschalten der geräteseitigen Aktorversorgungsspannung - ein gefahrtragendes Weiter- oder Wiederanlaufen des Aktors für den Fall, dass der Aktor z.B. durch einen Kabelschaden aus der Spannungsversorgung der Sensoren für ein An- oder Weiterlaufen genug Strom zur Verfügung gestellt bekommt.

Die nach den Ausführungsbeispielen im Versorgungskabel bzw. im Kabelbaum integrierte Elektronikbaugruppe kann selbstverständlich auch am oder im mechatronischen Gerät angeordnet sein.

Weitere Einzelheiten der Erfindung ergeben sich aus den Unteransprüchen und der nachfolgenden Beschreibung mehrerer schematisch dargestellter Ausführungsformen.
- Figur 1:: Draufsicht auf die Sicherheitsabschaltvorrichtung für mechatronische Geräte, deren Strombedarf über zwei Ampere liegt;
- Figur 2:: Draufsicht auf die Sicherheitsabschaltvorrichtung für mechatronische Geräte, deren Strombedarf unter zwei Ampere liegt;
- Figur 3:: Übersichtsplan der Elektronikbaugruppe gemäß der Sicherheitsabschaltvorrichtung nach Figur 1;
- Figur 4:: Schaltplan zu Figur 3.

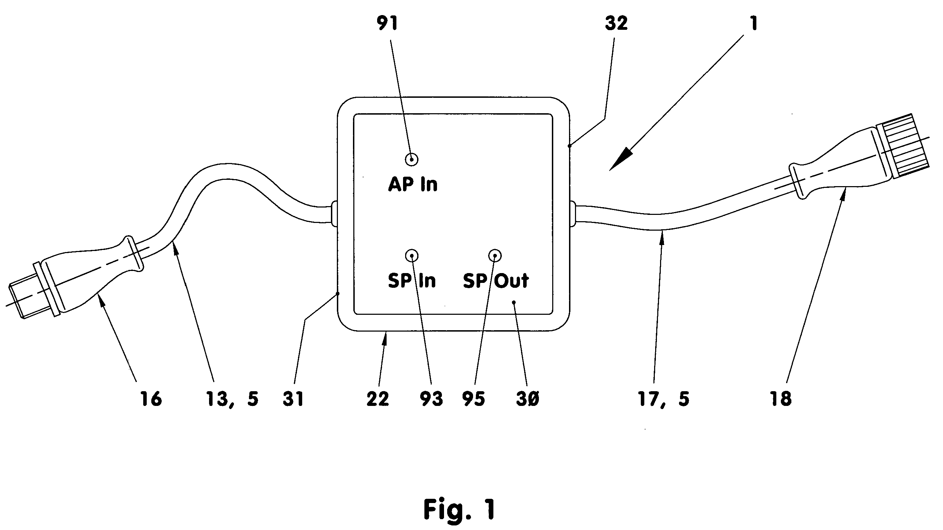

Die Figur 1 zeigt eine Sicherheitsabschaltvorrichtung (1) für Kurzhubachsen bzw. Kleinachsenantriebe. Diese Achsen und Antriebe sind elektrisch angetriebene oder zumindest elektronisch überwachte mechatronische Geräte oder Komponenten. Ihr maximaler Strombedarf liegt z.B. bei zwei Ampere. Sowohl das mechatronische Gerät als auch der in ihm verbaute Aktor ist in den Figuren nicht dargestellt.

Die Sicherheitsabschaltvorrichtung (1) ist beispielsweise eine in einem Versorgungskabel (5) integrierte Elektronikbaugruppe (20), die in der Zuleitung des jeweiligen mechatronischen Geräts angeordnet ist.

In das Gehäuse (22) der Elektronikbaugruppe (20) münden im Ausführungsbeispiel nach Figur 1 zwei Kabel mit je fünf Leitern. Das erste Kabel ist ein Masterkabel (13), das an seinem freien Ende einen Zuleitungsstecker (16) trägt. Letzterer ist ein M12-Powerstecker mit L-Codierung für einen IO-Link/Power-Masterport Class B der Leistungsklasse LK-B, der an einem IO-Link-Master angeschlossen wird. Die im geeigneten Masterkabel (13) integrierten Lastleitungen sind je nach Querschnitt mit bis zu 16 Ampere belastbar.

Das zweite Kabel ist ein Gerätekabel (17), das zum mechatronischen Gerät hin in einer Gerätebuchse (18) endet. Die Gerätebuchse (18) ist eine IO-Link/Power-M12-Class Port B-Buchse. Das Gerätekabel (17) entspricht im Aufbau dem Masterkabel (13). Seine endseitige Gerätebuchse (18) ist ebenfalls L-codiert.

Das nach Figur 1 zwischen den beiden Kabeln (15, 17) gelegene Gehäuse (22) der Elektronikbaugruppe (20) ist z.B. quaderförmig gestaltet. In einer seiner beispielsweise zumindest annähernd quadratisch gestalteten Frontfläche (30) sind drei Leuchtdioden (91, 93, 95) angeordnet, die im Betrieb durch entsprechendes Leuchten das Anliegen von Spannung an bestimmten Leitungsabschnitten anzeigen.

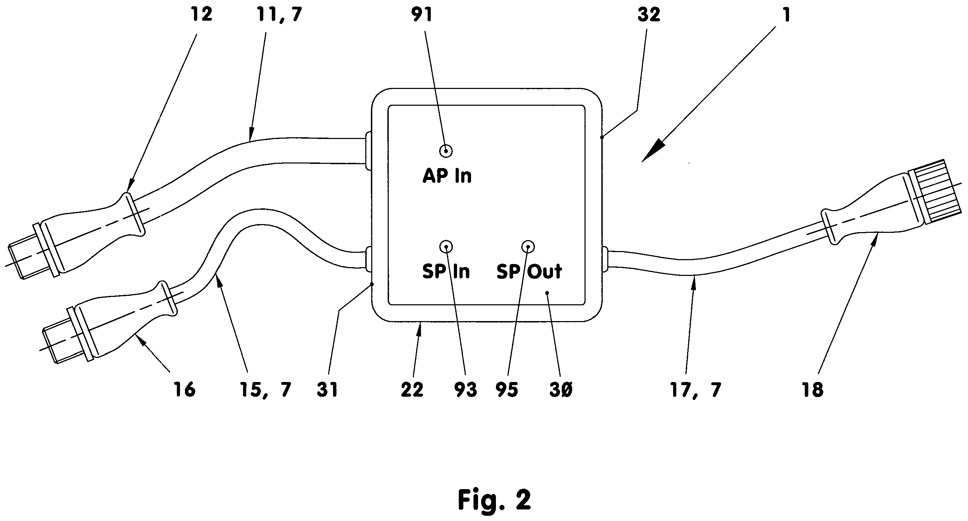

Figur 2 zeigt eine Sicherheitsabschaltvorrichtung (1) für mechatronische Geräte, deren Strombedarf über zwei Ampere liegt. Hierfür wird ein dreiteiliger Kabelbaum (7) mit integrierter Elektronikbaugruppe (20) verwendet. Am Gehäuse (22) sind demnach drei Kabel angeschlossen. Neben den aus Figur 1 bekannten Kabeln (17) und (13), hier jetzt als Kabel (15) bezeichnet, mündet als drittes Kabel ein Netzteilkabel (11) - zum Anschluss an ein externes, hier nicht dargestelltes Netzteil - im Gehäuse (22). Das Netzteilkabel (11), das z.B. mit einem größeren Durchmesser ausgestattet ist, endet in einem Stromversorgungsstecker (12). Letzterer ist z.B. ein vierpoliger T-kodierter M12-Powerstecker. Der Stromversorgungsstecker (12) und das Netzteilkabel (11) sind für eine Strombelastung von maximal 12 Ampere ausgelegt.

Bei der kleineren Leistungsklasse LK-A wird stattdessen ein 4-poliger A-codierter M12-Steckverbinder benutzt.

Im Masterkabel (15) sind die ansonsten laststromführenden Litzen nicht belegt. Diese Litzen sind im Zuleitungsstecker (16) nicht an den entsprechenden Pins angeschlossen.

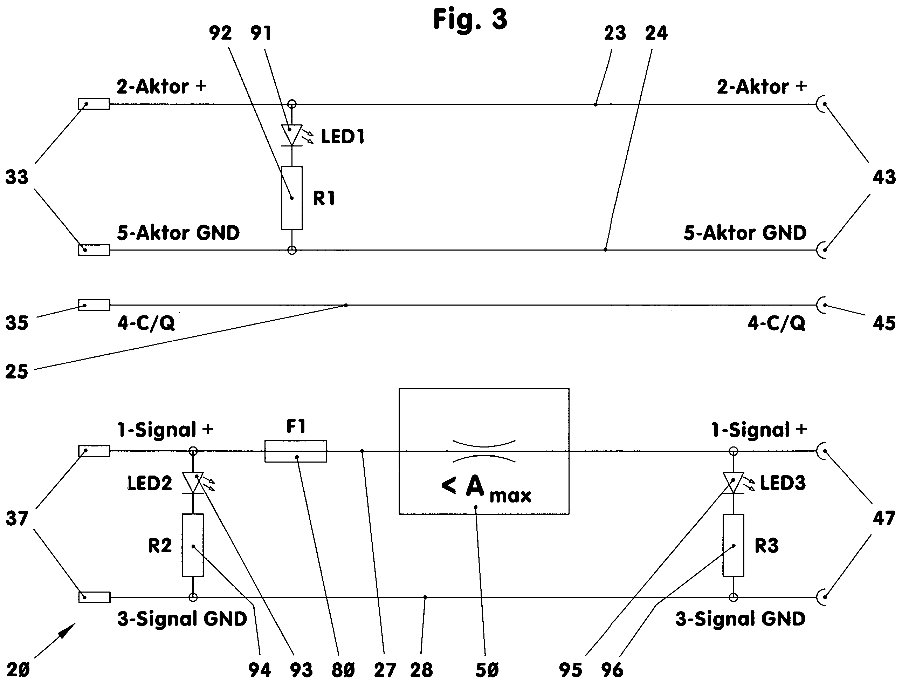

Die Figur 3 zeigt einen Übersichtsplan der Elektronikbaugruppe (20) als vereinfachtes Schaltbild mit zwei Strombegrenzungsmodulen (50, 80), wobei ein Strombegrenzungsmodul (50) als Blackbox dargestellt ist. Der Übersichtsplan stellt einen Schaltplan mit den Pinbelegungen der Steckerkabelanschlüsse (33, 35, 37) und der Buchsenkabelanschlüsse (43, 45, 47) dar. Die Bezeichnungen der Kabelanschlüsse (33, 35, 37, 43, 45, 47) und die Pinbelegungen der Zuleitungsstecker (16) und der Gerätebuchsen (18) entsprechen dem IO-Link-Interface Class Port B nach der Norm ICE 61131-9.

In der oberen Hälfte der Figur 3 sind beispielsweise zwischen den beiden Steckerkabelanschlüssen (33) und den beiden Buchsenkabelanschlüssen (43) eine Plus-Lastleitung (23) für 0-24 V oder 0-48 V und eine GND-Lastleitung (24) angeordnet. Über beide fließt die Aktorstromversorgung. Die Bezeichnungen nach der Norm ICE 61131-9 für Kommunikationsschnittstellen stehen beidseits neben den Kabelanschlüssen (33, 43). Zwischen den beiden Lastleitungen (23, 24) ist die Leuchtdiode (91), ggf. mit einem Vorwiderstand (92), geschaltet. Solange der Aktor des mechatronischen Geräts im regulären Betriebszustand arbeitet, leuchtet die Leuchtdiode (91).

In der unteren Hälfte der Figur 3 sind beispielsweise zwischen den beiden Signalsteckerkabelanschlüssen (37) und den beiden Signalbuchsenkabelanschlüssen (47) eine Plus-Signalleitung (27) und eine GND-Signalleitung (28) angeordnet. Über diese werden die Sensoren des mechatronischen Geräts von dem IO-Master mit 24V-Spannung versorgt. Zwischen den beiden Signalleitungen (27, 28) ist hinter den beiden Signalsteckerkabelanschlüssen (37) die Leuchtdiode (93), ggf. mit einem Vorwiderstand (94), geschaltet. Das Leuchten der Leuchtdiode (93) zeigt im Betrieb das Anliegen der Sensorversorgungsspannung an.

Zwischen den beiden Signalleitungen (27, 28) ist zudem vor den beiden Signalbuchsenkabelanschlüssen (47) die Leuchtdiode (95), ggf. mit einem Vorwiderstand (96), geschaltet. Die Leuchtdiode (95) leuchtet bei einer funktionierenden Signalspannungsverbindung zwischen den Strombegrenzungsmodulen (50, 80) und dem mechatronischen Gerät.

In der Plus-Signalleitung (27) sind zwischen den beiden Abzweigungen zu den Leuchtdioden (93, 95) zwei Strombegrenzungsmodule (50, 80) direkt hintereinander angeordnet. Das als Blackbox dargestellte Strombegrenzungsmodul (50) beinhaltet ein elektronisches Bauteil oder eine elektronische Schaltung, die den Strom in der Plus-Signalleitung (27) im Ausführungsbeispiel auf maximal 185 mA begrenzt.

Sollte das Strombegrenzungsmodul (50) im Bedarfsfall einen höheren Strom durchlassen, unterbricht das Strombegrenzungsmodul (80) die Plus-Signalleitung (27) dauerhaft. Dazu ist dieses Strombegrenzungsmodul eine Geräteschutzsicherung (80) mit Schmelzeinsatz. Letztere ist beispielsweise eine flinke 200 mA-Feinsicherung. Ihre Ansprechzeit bis zur Stromunterbrechung beträgt maximal 3 Sekunden.

Die Signalleitungen (27, 28) und die Lastleitungen (23, 24) sind galvanisch voneinander getrennt.

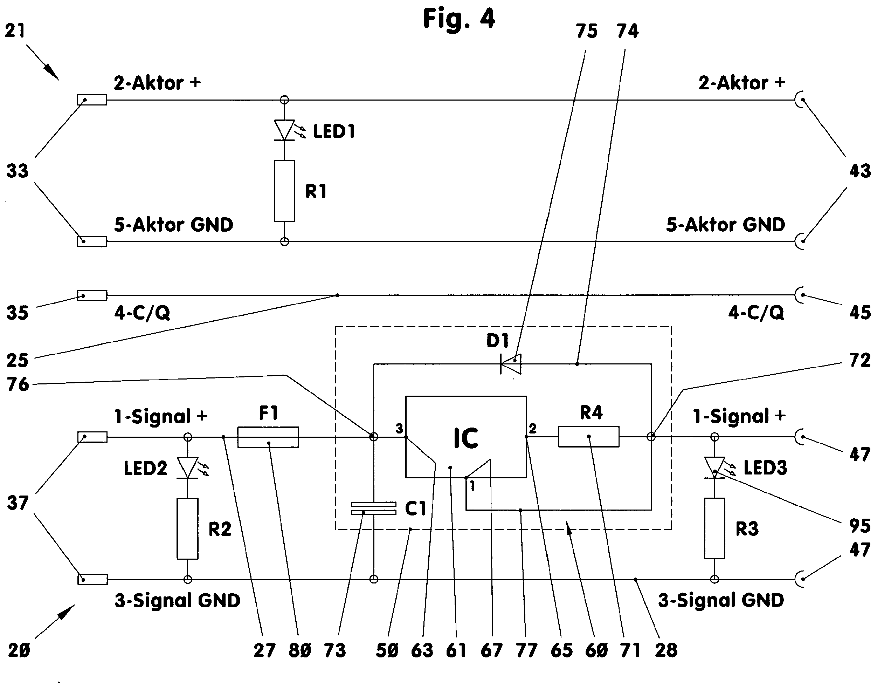

In den Figuren 3 und 4 ist nur beispielhaft zwischen der Lastleitung (24) und der Signalleitung (27) eine Kommunikationsleitung (25) angeordnet. Über sie werden Identifikation-, Prozess-, Diagnose- und Parametrierdaten übertragen. Die Kommunikationsleitung (25) ist durch die Elektronikbaugruppe (20) ohne Kontakt zu den Last- und Signalleitungen hindurchgeschleift.

In Figur 4 ist die Blackbox (50) aus Figur 3 als eine konkrete, z.B. platinengestützte Schaltung eines Strombegrenzungsmoduls (60) ausgeführt. Hinter der Geräteschutzsicherung (80) ist in der Plus-Signalleitung (27) als IC ein integrierter linearer Längsregler (61), z.B. vom Typ LM317, eingebaut.

Selbstverständlich kann der Längsregler auch als eine diskrete, aus einzelnen Elektronikbauteilen aufgebaute, Schaltung gestaltet sein. Auch vergleichbare Schaltungen gleicher Funktion sind denkbar.

Der Längsregler (61) ist als Konstantstromquelle beschaltet. Am Anschluss (65) des Reglerausgangs 2 ist in der Plus-Signalleitung (27) der Widerstand R4 (71) angeordnet, über den die maximal zulässige Stromstärke des Strombegrenzungsmoduls (60) bestimmt wird. Für eine maximal zulässige Stromstärke von 185 mA sollte der Widerstand R4 (71) einen Widerstand von 6,76 Ω haben.

Zwischen dem Widerstand R4 (71) und der Abzweigung zur Leuchtdiode (95) befindet sich der Rückführungsstartpunkt (72). Zwischen Letzterem und dem Reglereinstellanschluss 3 (67) erstreckt sich eine Einstellleitung (77).

Parallel zum Längsregler (61) und zum Widerstand R4 (71) ist in der Rückführleitung (74) eine Freilaufdiode D1 (75) eingebaut. Ihre Katode ist mit dem Rückführungsendpunkt (76) der Plus-Signalleitung (27) verbunden. Der Rückführungsendpunkt (76) liegt zwischen der Geräteschutzsicherung (80) und dem Reglereingangsanschluss (63). Zwischen dem Rückführungsendpunkt (76) und der GND-Signalleitung (28) ist zur Ausbildung eines Tiefpassfilters ein Kondensator C1 (73) angeordnet.

Die restlichen Teile der Schaltung der Figur 4 entsprechen der der Figur 3.

Die Aktoren der mechatronischen Geräte haben für den Notfall Klemmungen oder Bremsen, die während eines regulären Betriebs im geöffneten Zustand verharren. Auf die für das Schließen der Bremsen zuständigen Bremsbacken wirken z.B. mechanisch vorgespannte Federspeicher. Bei einem Stromausfall geben z.B. elektromechanische Gesperre die vorgespannten Federspeicher frei, womit die Bremsen greifen. Zum Lösen der Bremsen müssen die Bremsbacken unter einem erneuten Spannen der Federspeicher, z.B. mittels eines elektrischen Spannantriebs, in ihre Offenstellung bewegt werden.

Sollte nun im Versorgungskabel (5) oder im Kabelbaum (7) oder auch im mechatronischen Gerät - nach einer Notfall-Abschaltung - ein Kurzschluss zwischen der Plus-Lastleitung (23) und der Plus-Signalleitung (27) entstehen, begrenzt die Konstantstromquelle des Strombegrenzungsmoduls (60) den Strom in der Plus-Signalleitung (27) auf 185 mA. Da der in dem mechatronischen Gerät integrierte Spannantrieb in der Regel für das erneute Spannen des Federspeichers bzw. das Lüften der Bremsbacken mehr als 400 mA Strom benötigt, kann der Fehlerstrom der Plus-Signalleitung (27) den Spannantrieb nicht starten und somit keine unbeabsichtigte und sicherheitstechnisch unzulässige Bewegung einleiten. Folglich verharrt das mechatronische Gerät in seiner sicheren Ausgangslage. Es kann nicht unkontrolliert anlaufen. Sollte die Strombegrenzung des Strombegrenzungsmoduls (60) nicht wirken und dabei die Plus-Signalleitung (27) nicht unterbrechen, brennt die in Reihe geschaltete 250mA-Feinsicherung (80) durch, womit der Spannantrieb weiterhin stromlos bleibt. Der Stromfluss in den Signalleitungen (27, 28) wird zwischen den Steckerkabelanschlüssen (37) und den Buchsenkabelanschlüssen (47) - bis zum Ersetzen der durchgeschmolzenen Feinsicherung (80) durch einen neue - sicher unterbrochen.

### Bezugszeichenliste:

- 1: Sicherheitsabschaltvorrichtung
- 5: Versorgungskabel
- 7: Kabelbaum

- 11: Netzteilkabel, großer Durchmesser
- 12: Stromversorgungsstecker, Stecker
- 13: Masterkabel für (5)
- 15: Masterkabel für (7)
- 16: Zuleitungsstecker, Stecker, Port B-Stecker, IO-Link/Power M12 Class Port B-Stecker
- 17: Gerätekabel
- 18: Gerätebuchse, Buchse, Port B-Buchse IO-Link/Power M12 Class Port B-Buchse

- 20: Elektronikbaugruppe
- 21: Schaltplan
- 22: Gehäuse von (20), Sicherungsgehäuse

- 23: Plus-Lastleitung, 24V-Lastleitung, Lastleitung
- 24: GND-Lastleitung, Lastleitung

- 25: Kommunikationsleitung, C/Q-Leitung

- 27: Plus-Signalleitung, Signalleitung, Signalversorgungsleitung
- 28: GND-Signalleitung, Signalleitung, Signalversorgungsleitung

- 30: Frontfläche von (22)
- 31: Eingangsseite von (20, 22)
- 32: Ausgangsseite von (20, 22)
- 33: Laststeckerkabelanschlüsse, Steckerkabelanschlüsse
- 35: Kommunikationssteckerkabelanschluss, Steckerkabelanschlüsse
- 37: Signalsteckerkabelanschlüsse, Steckerkabelanschlüsse

- 43: Lastbuchsenkabelanschlüsse, Buchsenkabelanschlüsse
- 45: Kommunikationsbuchsenkabelanschluss, Buchsenkabelanschlüsse
- 47: Signalbuchsenkabelanschlüsse, Buchsenkabelanschlüsse

- 50: Strombegrenzungsmodul, Blackbox

- 60: Strombegrenzungsmodul, erstes
- 61: Längsregler, integriert, linearer, als Konstantstromquelle beschaltet, IC

- 63: Reglereingangsanschluss (3)
- 65: Reglerausgangsanschluss (2)
- 67: Reglereinstellanschluss (1)

- 71: Widerstand (R4)
- 72: Rückführungsstartpunkt
- 73: Kondensator (C1)
- 74: Rückführung
- 75: Diode (D1)
- 76: Rückführungsendpunkt
- 77: Einstellleitung

- 80: Geräteschutzsicherung, Feinsicherung F1, Strombegrenzungsmodul, 200- bis 250mA-Feinsicherung
- 91: Leuchtdiode LED1
- 92: Vorwiderstand R1
- 93: Leuchtdiode LED2
- 94: Vorwiderstand R2
- 95: Leuchtdiode LED3
- 96: Vorwiderstand R3

- AP In: Aktorport, Eingang, Beschriftung der Frontfläche (30)
- SP In: Signalport, Eingang, Beschriftung der Frontfläche (30)
- SP Out: Signalport, Ausgang, Beschriftung der Frontfläche (30)

## Patentansprüche

1. Sicherheitsabschaltvorrichtung für ein mechatronisches Gerät zur Gewährleistung einer sicheren Nothalt-Funktion,
- wobei die Sicherheitsabschaltvorrichtung (1) ein Versorgungskabel (5) oder ein Kabelbaum (7) und eine Elektronikbaugruppe (20) ist,
- wobei die Elektronikbaugruppe (20) im Versorgungskabel (5) oder im Kabelbaum (7) integriert oder am mechatronischen Gerät angeordnet ist,
- wobei an einer Eingangsseite (31) der Elektronikbaugruppe (20) mindestens ein Masterkabel (13; 15) und an einer Ausgangsseite (32) ein Gerätekabel (17) angeschlossen ist, wobei das Versorgungskabel (5) oder der Kabelbaum (7) das mindestens eine Masterkabel und das Gerätekabel umfasst
- wobei das Masterkabel (13; 15) mit einem IO-Link-Master und das Gerätekabel (17) mit dem mechatronischen Gerät verbindbar ist,
- wobei das Masterkabel 13; 15) und das Gerätekabel (17) zwei Lastleitungen (23, 24) und zwei Signalleitungen (27, 28), das sind eine Plus-Signalleitung (27) und eine GND-Signalleitung (28), umfassen und
- wobei die Sicherheitsabschaltvorrichtung mindestens ein in der Plus-Signalleitung (27) angeordnetes Strombegrenzungsmodul (50, 60; 80) der Elektronikbaugruppe (20) aufweist,
- sodass das mechatronische Gerät nicht unkontrolliert anlaufen kann.

2. Sicherheitsabschaltvorrichtung gemäß Anspruch 1, **dadurch gekennzeichnet, dass** das Strombegrenzungsmodul (60), als Teil der Elektronikbaugruppe (20), ein integrierter linearer Längsregler (61) ist, der als Konstantstromquelle beschaltet ist.

3. Sicherheitsabschaltvorrichtung gemäß Anspruch 1, **dadurch gekennzeichnet, dass** einem ersten Strombegrenzungsmodul (50, 60) ein zweites Strombegrenzungsmodul (80) in Reihe vor- oder nachgeschaltet ist.

4. Sicherheitsabschaltvorrichtung gemäß Anspruch 3, **dadurch gekennzeichnet, dass** das zweite Strombegrenzungsmodul eine Geräteschutzsicherung (80) mit Schmelzeinsatz ist.

5. Sicherheitsabschaltvorrichtung gemäß Anspruch 1, **dadurch gekennzeichnet, dass** zwischen den beiden Lastleitungen (23, 24) mindestens eine Leuchtdiode (91) angeordnet ist.

6. Sicherheitsabschaltvorrichtung gemäß Anspruch 3, **dadurch gekennzeichnet, dass** zwischen den beiden Signalleitungen (27, 28), sowohl vor als auch hinter den beiden hintereinandergeschalteten Strombegrenzungsmodulen (50, 60; 80), jeweils mindestens eine Leuchtdiode (93, 95) angeordnet
ist.

7. Sicherheitsabschaltvorrichtung gemäß Anspruch 1, **dadurch gekennzeichnet, dass** die Elektronikbaugruppe (20) in einem separaten Gehäuse (22) angeordnet ist, wobei in einer Wandung des Gehäuses (22) drei Leuchtdioden (91, 93, 95) angeordnet sind.

8. Sicherheitsabschaltvorrichtung gemäß Anspruch 1, **dadurch gekennzeichnet, dass** an der Eingangsseite (31) der Elektronikbaugruppe (20) und/oder des Gehäuses (22), neben dem Masterkabel (15), ein Netzteilkabel (11) angeschlossen ist, das mit einem externen Netzteil verbunden ist.

9. Sicherheitsabschaltvorrichtung gemäß der Ansprüche 1 und 8, **dadurch gekennzeichnet, dass** das Gerätekabel (17) in einer Buchse (18) endet.

10. Sicherheitsabschaltvorrichtung gemäß dem Anspruch 8, **dadurch gekennzeichnet, dass** das Masterkabel (15) und das Netzteilkabel (11) jeweils in einem separaten Stecker (16, 12) endet.

## Claims

1. A safety cut-off device for a mechatronic apparatus to ensure a safe emergency stop function,
- wherein the safety cut-off device (1) is a supply cable (5) or a cable harness (7) and an electronic assembly (20),
- wherein the electronic assembly (20) is integrated in the supply cable (5) or in the cable harness (7) or is arranged on the mechatronic apparatus,
- wherein at least one master cable (13; 15) is connected to an input side (31) of the electronic assembly (20), and an apparatus cable (17) is connected to an output side (32), wherein the supply cable (5) or the cable harness (7) comprises the at least one master cable and the apparatus cable,
- wherein the master cable (13; 15) can be connected to an IO link master, and the apparatus cable (17) can be connected to the mechatronic apparatus,
- wherein the master cable (13; 15) and the apparatus cable (17) comprise two load lines (23, 24) and two signal lines (27, 28), that is, a positive signal line (27) and a GND signal line (28), and
- wherein the safety cut-off device has at least one current-limiting module (50, 60; 80) of the electronic assembly (20), said current-limiting module being arranged in the positive signal line (27),
- so that the mechatronic apparatus cannot start in an uncontrolled manner.

2. The safety cut-off device according to Claim 1, **characterised in that** the current-limiting module (60), as part of the electronic assembly (20), is an integrated linear in-phase regulator (61), which is connected as a constant current source.

3. The safety cut-off device according to Claim 1, **characterised in that** a second current-limiting module (80) is series-connected upstream or downstream of a first current-limiting module (50, 60).

4. The safety cut-off device according to Claim 3, **characterised in that** the second current-limiting module is an apparatus safety fuse (80) with a fuse cartridge.

5. The safety cut-off device according to Claim 1, **characterised in that** at least one light-emitting diode (91) is arranged between the two load lines (23, 24).

6. The safety cut-off device according to Claim 3, **characterised in that** in each case at least one light-emitting diode (93, 95) is arranged between the two signal lines (27, 28), both upstream and downstream of the two successive current-limiting modules (50, 60; 80).

7. The safety cut-off device according to Claim 1, **characterised in that** the electronic assembly (20) is arranged in a separate housing (22), wherein three light-emitting diodes (91, 93, 95) are arranged in a wall of the housing (22).

8. The safety cut-off device according to Claim 1, **characterised in that** a power supply unit cable (11), which is connected to an external power supply unit, is connected to the input side (31) of the electronic assembly (20) and/or of the housing (22), next to the master cable (15).

9. The safety cut-off device according to Claims 1 and 8, **characterised in that** the apparatus cable (17) ends in a socket (18).

10. The safety cut-off device according to Claim 8, **characterised in that** the master cable (15) and the power supply unit cable (11) each end in a separate plug (16, 12).

## Revendications

1. Dispositif de coupure de sécurité, destiné à un appareil mécatronique, pour assurer une fonction d'arrêt d'urgence sécure,
- le dispositif de coupure de sécurité (1) étant un câble d'alimentation (5) ou un faisceau de câbles (7) et un assemblage électronique (20),
- l'assemblage électronique (20) étant intégré dans le câble d'alimentation (5) ou dans le faisceau de câbles (7) ou étant placé sur l'appareil mécatronique,
- sur un côté entrée (31) de l'assemblage électronique (20) étant raccordé au moins un câble maître (13 ; 15) et sur un côté sortie (32) étant raccordé un câble d'appareil (17), le câble d'alimentation (5) ou le faisceau de câbles (7) comprenant l'au moins un câble maître et le câble d'appareil,
- le câble maître (13 ; 15) pouvant se connecter avec un maître IO-Link et le câble d'appareil (17) pouvant se connecter avec l'appareil mécatronique,
- le câble maître (13 ; 15) et le câble d'appareil (17) comprenant deux lignes de charge (23, 24) et deux lignes de signal (27, 28), il s'agit d'une ligne de signal (27) plus et d'une ligne de signal (28) GND et
- le dispositif de coupure de sécurité comportant au moins un module (50, 60 ; 80) l'imitateur de courant de l'assemblage électronique (20), placé dans la ligne de signal (27) plus,
- de sorte que l'appareil mécatronique ne puisse pas démarrer de manière incontrôlée.

2. Dispositif de coupure de sécurité selon la revendication 1, **caractérisé en ce qu'**en tant que partie de l'assemblage électronique (20), le module (60) limitateur de courant est un régulateur série (61) linéaire intégré, qui est monté en tant que source de courant constant.

3. Dispositif de coupure de sécurité selon la revendication 1, **caractérisé en ce qu'**en amont ou en aval d'un premier module (50, 60) limitateur de courant, un deuxième module (80) limitateur de courant est monté en série.

4. Dispositif de coupure de sécurité selon la revendication 3, **caractérisé en ce que** le deuxième module limitateur de courant est un coupe-circuit (80) d'appareil avec un fusible.

5. Dispositif de coupure de sécurité selon la revendication 1, **caractérisé en ce qu'**entre les deux lignes de charge (23, 24) est placée au moins une diode électroluminescente (91).

6. Dispositif de coupure de sécurité selon la revendication 3, **caractérisé en ce qu'**entre les deux lignes de signal (27, 28), aussi bien à l'avant qu'à l'arrière des deux modules (50, 60 ; 80) limitateurs de courant, montés l'un derrière l'autre est placée chaque fois au moins une diode électroluminescente (93, 95).

7. Dispositif de coupure de sécurité selon la revendication 1, **caractérisé en ce que** l'assemblage électronique (20) est placé dans un boîtier (22) séparé, dans une paroi du boîtier (22) étant placées trois diodes électroluminescentes (91, 93, 95).

8. Dispositif de coupure de sécurité selon la revendication 1, **caractérisé en ce que** sur le côté entrée (31) de l'assemblage électronique (20) et / ou du boîtier (22), à côté du câble maître (15) est placé un câble (11) de bloc secteur, qui est connecté avec un bloc secteur externe.

9. Dispositif de coupure de sécurité selon les revendications 1 et 8, **caractérisé en ce que** le câble d'appareil (17) se termine dans une douille (18).

10. Dispositif de coupure de sécurité selon la revendication 8, **caractérisé en ce que** le câble maître (15) et le câble (11) de bloc secteur terminent chacun dans un connecteur (16, 12) séparé.
